# EUROPEAN PATENT APPLICATION

(11) **EP 4 692 614 A1**
(43) Date of publication of application: **11.02.2026**
(21) Application number: 24779165.0
(22) Date of filing: 05.03.2024
(51) Int. Cl.: F16K 27/02, F16K 1/38

(54) **VALVE DEVICE**

(30) Priority: 31.03.2023 JP 2023058478
(71) Applicant: KAWASAKI JUKOGYO KABUSHIKI KAISHA, Kobe-shi, Hyogo 650-8670 (JP); TOYOTA JIDOSHA KABUSHIKI KAISHA, Toyota-shi Aichi 471-8571 (JP)
(72) Inventor: HAYASE, Tomoya, Hyogo 6508670 (JP); NINOMIYA, Makoto, Hyogo 6508670 (JP); NAKAMURA, Noritaka, Hyogo 6508670 (JP); KAMIYA, Toshihiko, Aichi-ken 471-8571 (JP); KANEKO, Naoto, Aichi-ken 471-8571 (JP)
(74) Representative: EIP
(86) International application number: PCT/JP2024/008275
(87) International publication number: WO 2024/203027

(57) **Abstract**

This valve device includes: a housing including a valve port located on one side in an axial direction and through which gas flows, and a valve chamber connected to the valve port; a guide disposed in the valve chamber and including a guide body that is cylindrical and a plurality of supports that extend outward from an outer peripheral surface of the guide body and abut an inner peripheral surface of the valve chamber; and a valve body inserted into the guide body and configured to open and close the valve port. One end of the guide body is spaced apart from the housing in the axial direction.

## Description

### Technical Field

The present disclosure relates to a valve device that controls the flow of gas.

### Background Art

Examples of the known valve device include the valve device disclosed in Patent Literature (PTL) 1. In the valve device disclosed in PTL 1, a case in the shape of a closed-bottom cylinder is housed in a housing. Furthermore, a valve body is housed in the case. The valve body moves within the case to close a valve hole.

### Citation List

### Patent Literature

PTL 1: Japanese Laid-Open Patent Application Publication No. 2018-71685

### Summary of Invention

### Technical Problem

In the valve device disclosed in PTL 1, the flowing gas may contain foreign matter such as moisture, for example. Furthermore, there are cases where foreign matter enters the area between the valve body and the case. For example, in the valve device disclosed in PTL 1, the case for guiding the valve body is in abutment with the housing, more specifically, a valve seat. Therefore, when foreign matter flowing together with the gas adheres to the valve seat, the foreign matter may travel along the valve seat and enter the case. In other cases, foreign matter may enter the case by flowing along the case together with the gas, for example.

Thus, an object of the present disclosure is to provide a valve device capable of impeding the ingress of foreign matter into the area between a case, i.e., a guide body, and a valve body.

### Solution to Problem

A valve device according to the first disclosure includes: a housing including a valve port located on one side in an axial direction and through which gas flows, and a valve chamber connected to the valve port; a guide disposed in the valve chamber and including a guide body that is cylindrical and a plurality of supports that extend outward from an outer peripheral surface of the guide body and abut an inner peripheral surface of the valve chamber; and a valve body inserted into the guide body and configured to open and close the valve port. One end of the guide body is spaced apart from the housing in the axial direction.

According to the first disclosure, when one end of the guide body is separate from the housing, foreign matter that has flowed together with the gas and adhered to the inner peripheral surface of the housing can be impeded from traveling along the one end of the guide body and entering the area between the guide body and the valve body. For example, when the foreign matter is water, solidification of water that has entered the area between the guide body and the valve body is less likely to occur.

A valve device according to the second disclosure includes: a housing including a valve port located on one side in an axial direction and through which gas flows, and a valve chamber connected to the valve port; a guide body that is cylindrical and disposed in the valve chamber; and a valve body inserted into the guide body and configured to open and close the valve port. The housing further includes a diameter-expanding part around the valve chamber. The diameter-expanding part extends on the one side and the other side of one end of the guide body in the axial direction that is an end located on the one side in the axial direction.

According to the second disclosure, when the diameter-expanding part is included, the inner peripheral surface of the housing can be radially separate from the one end of the guide body. As a result, foreign matter that has flowed together with the gas and adhered to the inner peripheral surface of the housing can be impeded from reaching the one end of the guide body. Furthermore, since the diameter-expanding part extends to a point on the other side of the one end of the guide body in the axial direction, foreign matter flowing in the diameter-expanding part is brought to the other side of the one end of the guide body in the axial direction. As a result, the foreign matter flowing together with the gas can be impeded from being brought to the one end of the guide body. And solidification of foreign matter that has entered the area between the guide body and the valve body is less likely to occur.

A valve device according to the third disclosure includes: a housing including a valve port located on one side in an axial direction and through which gas flows, and a valve chamber connected to the valve port; a guide body that is cylindrical and disposed in the valve chamber; and a valve body inserted into the guide body and configured to open and close the valve port. The valve body includes: a valve shaft that is inserted into the guide body; and a valve head part located on the one side of the guide body in the axial direction and including an outermost peripheral portion greater in diameter than the valve shaft. The valve head part covers an area between the guide body and the valve shaft as viewed from the one side in the axial direction.

According to the third disclosure, the valve head part covers the area between the valve shaft and the guide body as viewed from the one side in the axial direction and thus, it is possible to impede the ingress of the gas into the area between the guide body and the valve shaft. As a result, it is possible to impede the ingress of foreign matter together with the gas into the area between the valve shaft and the guide body.

### Advantageous Effects of Invention

According to the present disclosure, it is possible to impede the ingress of foreign matter into the area between a guide body and a valve body.

The above object, other objects, features, and advantages of the present disclosure will be made clear by the following detailed explanation of preferred embodiments with reference to the attached drawings.

### Brief Description of Drawings

Fig. 1 is a cross-sectional view illustrating a check valve according to an embodiment of the present disclosure.
Fig. 2 is an enlarged cross-sectional view illustrating an enlarged view of a region X in the check valve of Fig. 1.
Fig. 3 is an enlarged cross-sectional view illustrating an enlarged view of a region Y in the check valve of Fig. 1.
Fig. 4 is a cross-sectional view of the check valve of Fig. 1 cut along the cut line IV-IV.
Fig. 5 is a cross-sectional view of the check valve of Fig. 1 cut along the cut line V-V.
Fig. 6 is an enlarged cross-sectional view illustrating the check valve of Fig. 1 in the closed state.
Fig. 7 is a cross-sectional view illustrating a check valve according to another embodiment.

### Description of Embodiments

Hereinafter, a check valve 1 according to the present disclosure will be described with reference to the aforementioned drawings. Note that the concept of directions mentioned in the following description is used for the sake of explanation; the orientations, etc., of elements according to the present disclosure are not limited to these directions. The check valve 1 described below is merely one embodiment of the present disclosure. Thus, the present disclosure is not limited to the embodiment and may be subject to addition, deletion, and alteration within the scope of the essence of the present disclosure.

### <Check Valve>

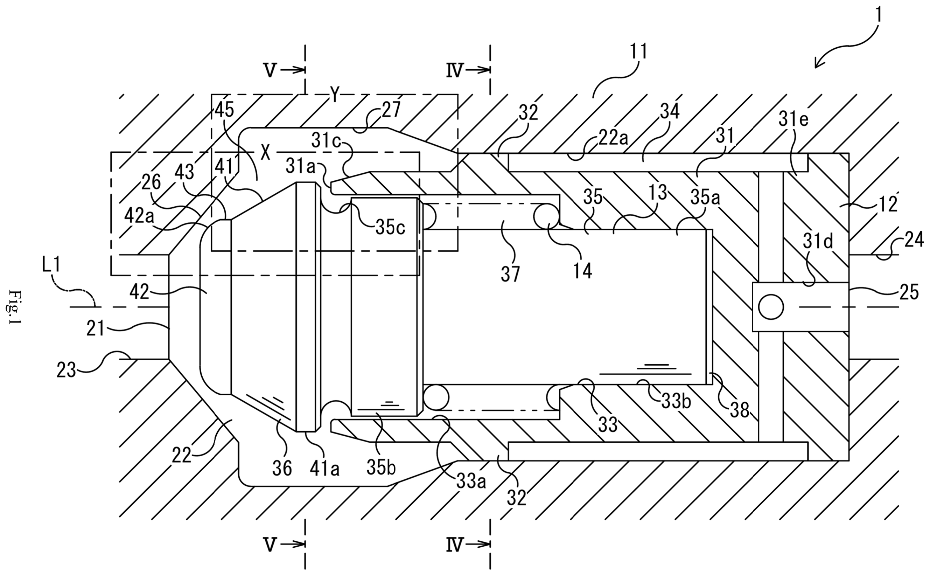

The check valve 1 illustrated in Fig. 1 is an example of a valve device that controls the flow of gas. The check valve 1 is provided in a flow path in which the gas flows. The check valve 1 allows the gas to flow in one direction in the flow path. Conversely, the check valve 1 blocks the gas from flowing in the opposite direction in the flow path. The gas is hydrogen, for example. Note that the gas is not limited to hydrogen and may be a gas other than hydrogen such as oxygen, natural gas, and nitrogen. The check valve 1 includes a housing 11, a guide 12, a valve body 13, and a spring member 14. The check valve 1 extends along a central axis L1 (hereinafter referred to as "the axis L1").

### <Housing>

The housing 11 includes a valve port 21 and a valve chamber 22. The valve port 21 is located on one side in an axial direction in the housing 11. The axial direction herein is, for example, a direction in which the check valve 1 extends. The gas flows to the valve port 21. The valve chamber 22 is connected to the valve port 21. More specifically, the valve chamber 22 is a hole located around the axis L1 in the housing 11 and having a circular cross-section. At the bottom of the valve chamber 22, the valve port 21 is located around the axis L1. More specifically, the housing 11 includes an inflow passage 23 and an outflow passage 24. The inflow passage 23 and the outflow passage 24 are located on the opposite sides of the valve chamber 22 in the axial direction. Specifically, the inflow passage 23 is located on the one side of the valve chamber 22 in the axial direction, and the outflow passage 24 is located on the other side of the valve chamber 22 in the axial direction. The inflow passage 23 is connected to the valve chamber 22 via the valve port 21. The outflow passage 24 is also connected to the valve chamber 22 via an outflow port 25 located around the axis L1.

Furthermore, the housing 11 includes a valve seat 26. The valve seat 26 is located around the valve port 21. More specifically, the valve seat 26 is located around the axis L1 and surrounds the valve port 21. The valve seat 26 is tapered, increasing in diameter with the distance from the valve port 21 in the axial direction. Note that the valve seat 26 does not necessarily need to be tapered. The valve seat 26 may be flat or may be in the form of a projection, for example.

Furthermore, the housing 11 includes a diameter-expanding part 27. The diameter-expanding part 27 is located around the valve chamber 22. More specifically, the diameter-expanding part 27 is disposed on the valve port 21 side around the valve chamber 22. The diameter-expanding part 27 extends on the one side and the other side of one end 31a of a guide body 31, which will be described later, in the axial direction. More specifically, the diameter-expanding part 27 extends on the valve port 21 side and the outflow port 25 side across the one end 31a of the guide body 31, which will be described later. The diameter-expanding part 27 is formed around the entire perimeter of the valve chamber 22 in the housing 11. In the present embodiment, the diameter-expanding part 27 is in the shape of a circular ring. The diameter-expanding part 27 is disposed on the valve port 21 side around the valve chamber 22. More specifically, a portion of the diameter-expanding part 27 that is located on the one side in the axial direction is connected to the valve seat 26. The diameter-expanding part 27 has the following shape in an area located on the other side of the one end 31a of the guide body 31, which will be described later, in axial the direction. Specifically, the diameter-expanding part 27 is reduced further in diameter toward the guide body 31 with increasing distance on the other side in the axial direction. In other words, the diameter-expanding part 27 is reduced further in diameter toward a radially inward area with increasing distance on the other side in the axial direction. An end of the diameter-expanding part 27 that is located on the other side in the axial direction is connected to an inner peripheral surface 22a of the valve chamber 22 which is located on the other side in the axial direction.

### <Guide>

The guide 12 includes the guide body 31 and a plurality of supports 32. The guide 12 is disposed in the valve chamber 22 of the housing 11. In the guide 12, the valve body 13 to be described later is inserted in the guide body 31. The guide 12 slidably guides, to the one side and the other side in the axial direction, the valve body 13 inserted thereto. Furthermore, with the plurality of supports 32 abutting the inner peripheral surface 22a of the valve chamber 22, that is, the inner peripheral surface of the housing 11, the guide 12 is supported by the housing 11. Hereinafter, the guide body 31 and the plurality of supports 32 included in the guide 12 will be described in more detail.

The guide body 31 is cylindrical. In the present embodiment, the guide body 31 is in the shape of a closed-bottom cylinder. Specifically, the guide body 31 includes a bottom part 31e. The guide body 31 is disposed in the valve chamber 22. More specifically, the guide body 31 is inserted into the valve chamber 22 so that the axis of the guide body 31 matches the axis L1 and the opening of the guide body 31 is directed to the valve port 21. An inner hole 33 of the guide body 31 includes a large-diameter portion 33a and a small-diameter portion 33b. The large-diameter portion 33a is located at the opening end (on the one side in the axial direction in the present embodiment) in the inner hole 33. The small-diameter portion 33b is located at the bottom end of the guide body 31 (on the other side in the axial direction in the present embodiment) in the inner hole 33. The small-diameter portion 33b is smaller in diameter than the large-diameter portion 33a.

The one end 31a of the guide body 31 is spaced apart from the housing 11 in the axial direction. Note that the one end 31a of the guide body 31 is an end of the guide body 31 that is located on the one side in the axial direction, that is, an open end thereof located on the valve port 21 side. The other end of the guide body 31 is an end of the guide body 31 that is located on the other side in the axial direction, that is, an end thereof located on the outflow port 25 side. More specifically, the axial length of the guide body 31 is less than the axial length of the valve chamber 22. The other end of the guide body 31 is in abutment with the housing 11 in the axial direction. Thus, the one end 31a of the guide body 31 is spaced apart from the housing 11 in the axial direction.

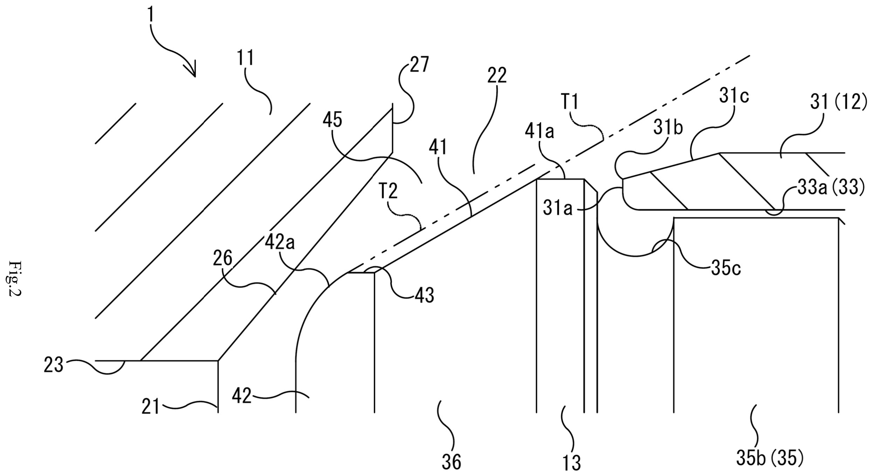

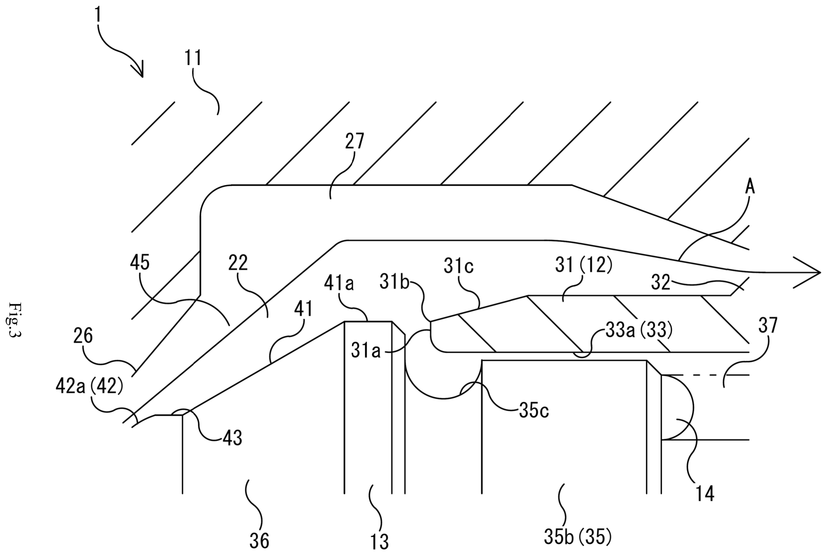

More specifically, the one end 31a of the guide body 31 is positioned away on the other side in the axial direction from a surface of the valve chamber 22 that is located on the one side in the axial direction in the housing 11, as illustrated in Fig. 2. In the present embodiment, the guide body 31 is disposed so that the one end 31a is spaced apart from the valve seat 26 in the axial direction. The one end 31a of the guide body 31 is disposed so that the diameter-expanding part 27 extends on the one side and the other side of the one end 31a in the axial direction, as illustrated in Fig. 3. Furthermore, on the other side of the one end 31a of the guide body 31 in the axial direction, the diameter-expanding part 27 is reduced further in diameter toward the guide body 31 with increasing distance on the other side in the axial direction. Meanwhile, the other end of the guide body 31 is in abutment with a surface of the valve chamber 22 that is located on the other side in the axial direction in the housing 11, as illustrated in Fig. 1. In the present embodiment, the other end of the guide body 31 is in abutment with the surface located around the outflow port 25.

Furthermore, the one end 31a of the guide body 31 is comer-chamfered, as illustrated in Fig. 2. Specifically, the guide body 31 includes an inclined part 31c on the outer peripheral surface of one end part of the guide body 31. The inclined part 31c is inclined so that the diameter thereof increases from the one end 31a of the guide body 31 to the other side in the axial direction.

Furthermore, the guide body 31 is fitted to the housing 11 at the other end part, as illustrated in Fig. 1. On the other hand, there is radial spacing between the housing 11 and a portion of the guide body 31 that extends from the one end 31a to a middle portion of the guide body 31. Therefore, an annular flow path 34 extending from the one end 31a to the middle portion of the guide body 31 is formed between the guide body 31 and the housing 11. Furthermore, the guide body 31 includes a communication path 31d in the bottom part 31e. The annular flow path 34 is connected to the outflow port 25 of the outflow passage 24 via the communication path 31d.

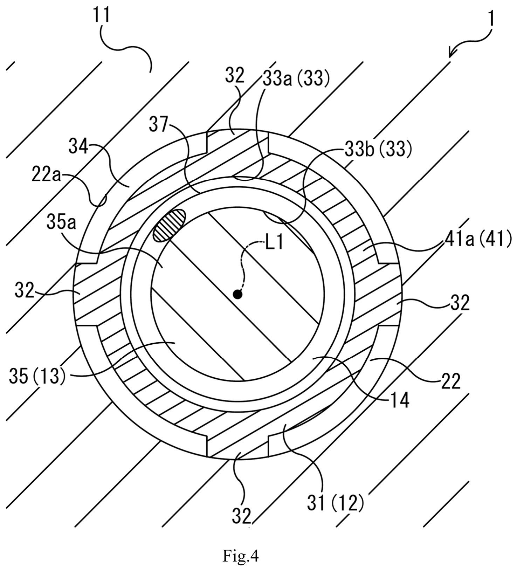

The plurality of supports 32 extend outward from the outer peripheral surface of the guide body 31. The plurality of supports 32 are in abutment with the inner peripheral surface 22a of the valve chamber 22. More specifically, the plurality of supports 32 are arranged spaced apart from each other on the outer peripheral surface of the guide body 31. In the present embodiment, four supports 32 are provided on the outer peripheral surface of the guide body 31, as illustrated in Fig. 4. The four supports 32 are arranged at equal circumferential intervals. Note that the plurality of supports 32 do not necessarily need to be arranged at equal intervals. The four supports 32 are disposed on the outer peripheral surface of the guide body 31, axially spaced apart from the other end part of the guide body 31, as illustrated in Fig. 1. In the present embodiment, the four supports 32 are disposed on the other side of the diameter-expanding part 27 in the axial direction and on the side of the one end of the guide body 31. In other words, the four supports 32 are in abutment with the inner peripheral surface 22a. Thus, with the other end part of the guide body 31 and the plurality of supports 32, the guide 12 is supported in two axially spaced locations on the housing 11. As a result, wobbling of the guide 12 is suppressed even when the one end 31a in the valve chamber 22 is separate from the housing 11. Furthermore, in the guide 12, the four supports 32 are arranged at circumferential intervals. Therefore, the annular flow path 34 allows the gas to flow from the one side to the other side in the axial direction via the spacing between the supports 32 that are adjacent to each other.

### <Valve Body>

The valve body 13 is inserted in the guide body 31. The valve body 13 opens and closes the valve port 21. More specifically, the valve body 13 reciprocates in the axial direction within the guide body 31. The valve body 13 reciprocates to open and close the valve port 21. Furthermore, a damping chamber 38 is formed between the valve body 13 and the bottom part 31e inside the guide body 31. The damping chamber 38 damps the axial motion of the valve body 13. Thus, the sudden motion of the valve body 13 is reduced. More specifically, the valve body 13 includes a valve shaft 35 and a valve head part 36. The valve shaft 35 is inserted in the inner hole 33 of the guide body 31. The guide body 31 slidably guides the valve shaft 35 in the axial direction. The valve head part 36 is located on the one side of the one end 31a of the guide body 31 in the axial direction. When the valve head part 36 is seated on the valve seat 26, the valve port 21 is closed.

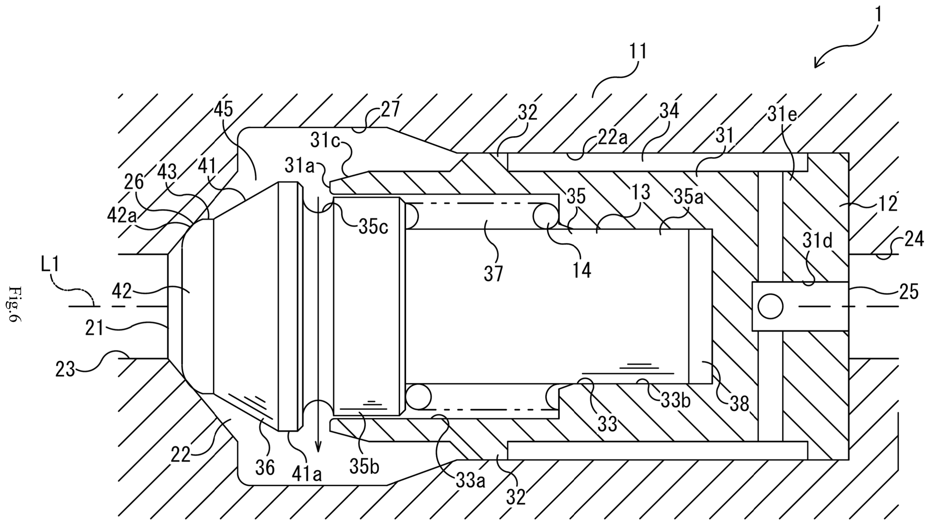

More specifically, the valve shaft 35 is in the shape of a circular column. The valve shaft 35 includes a small-diameter part 35a, a large-diameter part 35b, and a recessed groove 35c. In the valve shaft 35, the small-diameter part 35a is located on the other side in the axial direction. The valve shaft 35 is slidably inserted in the small-diameter portion 33b of the inner hole 33. The small-diameter part 35a projects from the small-diameter portion 33b to the large-diameter portion 33a of the inner hole 33. The large-diameter part 35b is located on the one side in the axial direction in the valve shaft 35. The large-diameter part 35b is slidably inserted in the large-diameter portion 33a of the inner hole 33. The large-diameter part 35b is away on the one side in the axial direction from the small-diameter portion 33b of the inner hole 33. Therefore, there is a spring housing space 37 in the shape of a circular ring around the small-diameter part 35a of the valve shaft 35 in the large-diameter portion 33a of the inner hole 33. The large-diameter part 35b projects from the one end 31a of the guide body 31 to the one side in the axial direction when the valve is closed (refer to Fig. 6 to be described later).

The recessed groove 35c extends around the entire perimeter of the outer peripheral surface of the valve shaft 35. The recessed groove 35c is a groove recessed radially inward from the outer peripheral surface of the valve shaft 35. At least a portion of the recessed groove 35c is exposed on the one side in the axial direction from the one end 31a of the guide body 31. More specifically, a portion of the valve shaft 35 projects from the one end 31a of the guide body 31 to the one side in the axial direction when the valve is closed. The recessed groove 35c extends around the entire perimeter of the outer peripheral surface of the projecting portion of the valve shaft 35. Furthermore, the recessed groove 35c is U-shaped in cross section. More specifically, a cross-section of the recessed groove 35c that is perpendicular to the circumferential direction is U-shaped.

The outermost peripheral portion of valve head part 36 is greater in diameter than the valve shaft 35. The valve head part 36 is located on the one side of the one end 31a of the guide body 31 in the axial direction. More specifically, the valve head part 36 is in the shape of an umbrella having a diameter increasing to the other side in the axial direction. Note that the valve head part 36 does not necessarily need to be formed in the shape of an umbrella. The valve head part 36 is provided integrally with the large-diameter part 35b of the valve shaft 35 that is located on the one side in the axial direction. Furthermore, the valve head part 36 covers the area between the guide body 31 and the valve shaft 35 as viewed from the one side in the axial direction. The valve head part 36 will be described in more detail; the valve head part 36 includes a tapered portion 41, a seating portion 42, and a separation portion 43. In the valve head part 36, the tapered portion 41, the seating portion 42, and the separation portion 43 are arranged sequentially from the other side in the axial direction.

In the valve head part 36, the tapered portion 41 is located on the other side of the separation portion 43 and the seating portion 42 in the axial direction. In the present embodiment, the tapered portion 41 is located at the far end of the valve head part 36 on the one side in the axial direction . The tapered portion 41 increases in diameter to the other side in the axial direction. Note that in the present embodiment, the tapered portion 41 includes a flange 41a on a portion at the far end on the other side in the axial direction. The flange 41a is a portion of the tapered portion 41 that has the same diameter. Since the flange 41a is located in the radially outermost area in the tapered portion 41, the flange 41a constitutes the outermost peripheral portion of the tapered portion 41. Note that the tapered portion 41 does not necessarily need to include the flange 41a. When the tapered portion 41 does not include the flange 41a, the outermost peripheral portion of the tapered portion 41 is a portion of the tapered portion 41 that is located in the radially outermost area, for example, a portion of the tapered portion 41 that is located at the far end thereof on the other side in the axial direction.

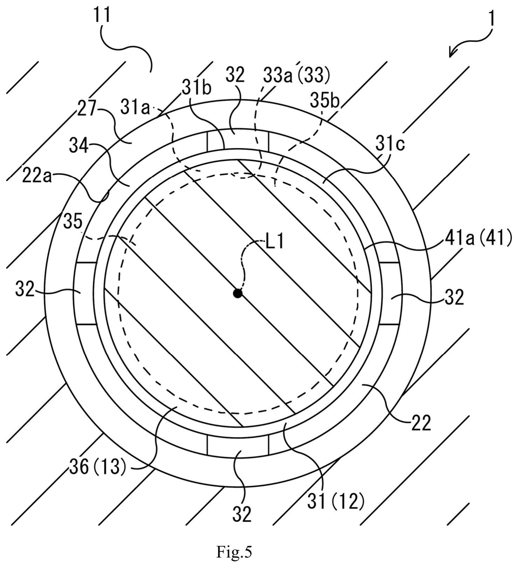

As illustrated in Fig. 5, the outermost peripheral portion of the tapered portion 41 overlaps the one end 31a of the guide body 31 as viewed from the one side in the axial direction. More specifically, the outermost peripheral portion of the tapered portion 41 is flush with an outer peripheral edge 31b of the one end 31a of the guide body 31. In the present embodiment, the outer peripheral surface of the flange 41a is flush with the outer peripheral edge 31b of the one end 31a of the guide body 31. Note that being flush with something includes not only being completely flush with something, but also being substantially flush with something. The tapered portion 41 is designed so that at least one end portion of the inclined part 31c is located radially inward of an extended line T1 of the tapered portion 41 that extends to the other side in the axial direction, as illustrated in Fig. 2. More specifically, the inclined part 31c is located radially inward of a surface of a virtual truncated cone formed by extending, to the other side in the axial direction, a tapered surface of the tapered portion 41 that increases in diameter with increasing distance on the other side in the axial direction.

The seating portion 42 is seated on the valve seat 26. More specifically, in the valve head part 36, the seating portion 42 is located on the one side of the tapered portion 41 and the separation portion 43 in the axial direction (also refer to Fig. 1). In the present embodiment, the seating portion 42 is located on a leading end portion of the valve head part 36. Note that the seating portion 42 does not necessarily need to be located on the leading end portion of the valve head part 36. The corners of the seating portion 42 are rounded. More specifically, the seating portion 42 has a round-chamfered outer peripheral edge. Thus, the seating portion 42 has a rounded surface 42a at the outer peripheral edge. With the rounded surface 42a at the outer peripheral edge seated on the valve seat 26, the seating portion 42 closes the valve port 21.

The separation portion 43, which is an example of the sudden shape-changing part, is located between the seating portion 42 and the tapered portion 41. More specifically, the peripheral surface of the separation portion 43 is connected to the peripheral surface of the seating portion 42. The shape of the separation portion 43 suddenly changes such that the respective peripheral surfaces of the separation portion 43 and the seating portion 42 are not smoothly connected. The separation portion 43 may be formed so that the curvature thereof is discontinuous with respect to the rounded surface 42a of the seating portion 42 or may be formed as a radially projecting or recessed portion. In other words, it is sufficient that the shape of the separation portion 43 suddenly change such that the gas flowing along the rounded surface 42a of the seating portion 42 moves away at the separation portion 43. In the present embodiment, the separation portion 43 is located radially inward of a tangent line T2 to a portion of the seating portion 42 that is connected to the separation portion 43 as viewed from the front, as illustrated in Fig. 2. More specifically, the central angle of the rounded surface 42a of the seating portion 42 is an acute angle, that is, less than or equal to 90 degrees. Therefore, the tangent line T2 diverges further from the axis L1 with increasing distance on the other side in the axial direction. The separation portion 43 is positioned radially inward of the tangent line T2 diverging from the axis L1. In the present embodiment, the separation portion 43 is in the shape of a circular column having the same outer diameter as the outer diameter of the portion connected to the seating portion 42. Note that the tapered portion 41 is also positioned radially inward of the tangent line T2.

### <Spring Member>

The spring member 14 biases the valve body 13 so that the valve body 13 moves toward the valve port 21. More specifically, the spring member 14 biases the valve body 13 to the one side in the axial direction. The valve body 13 is seated on the valve seat 26 by the spring member 14. In the present embodiment, the spring member 14 is a helical compression spring. The spring member 14 is provided on the exterior of the valve shaft 35 of the valve body 13 and is housed in the spring housing space 37.

### <Position Example of Check Valve>

The check valve 1 configured as described above is disposed so that the axis L1 becomes horizontal, for example. In the check valve 1, when the axis L1 is horizontal, the valve body 13 is disposed so that at least a portion of the recessed groove 35c is open downward in the direction of gravity. More specifically, the valve body 13 is disposed so that at least a portion of the opening of the recessed groove 35c extending around the entire perimeter is directed downward in the direction of gravity. Note that the axis L1 being horizontal does not necessarily need to be the axis L1 being completely horizontal and may be the axis L1 being inclined to the horizon as long as at least a portion of the recessed groove 35c is open downward in the direction of gravity. Furthermore, the check valve 1 does not necessarily need to be disposed so that the axis L1 becomes horizontal.

### <Movement of Check Valve>

In the check valve 1, the damping chamber 38 has the same pressure as the gas pressure of the outflow port 25. Therefore, the gas pressure of the valve port 21 and the gas pressure of the outflow port 25 act against each other on the valve body 13. Accordingly, the valve body 13 moves according to the pressure difference between the gas pressure of the valve port 21 and the gas pressure of the outflow port 25. For example, when the gas pressure of the valve port 21 falls below the gas pressure of the outflow port 25 or when the pressure difference becomes less than a predetermined pressure even with the gas pressure of the valve port 21 higher than the gas pressure of the outflow port 25, the valve body 13 is seated on the valve seat 26, as illustrated in Fig. 6. The predetermined pressure is the pressure corresponding to the biasing force of the spring member 14. When the valve body is seated, the valve port 21 is closed and thus, the flow of gas from the outflow port 25 to the valve port 21 ceases. This means that the check valve 1 blocks the flow from the outflow passage 24 to the inflow passage 23.

Meanwhile, when the gas pressure of the valve port 21 is greater than the gas pressure of the outflow port 25 and the pressure difference exceeds the predetermined pressure, the valve 13 disengages from the valve seat 26, as illustrated in Fig. 1. As a result, the gas in the valve port 21 flows to an annular space 45, which is located around the valve head part 36, through the area between the seating portion 42 of the valve body 13 and the valve seat 26 (refer to the arrow A in Fig. 3). Furthermore, the gas flows from the annular space 45 to the annular flow path 34 through the diameter-expanding part 27. Moreover, the gas flows out from the annular flow path 34 to the outflow passage 24 via the communication path 31d of the guide body 31 and the outflow port 25. Thus, in the check valve 1, when the gas pressure of the valve port 21 is greater than the gas pressure of the outflow port 25 and the pressure difference becomes greater than or equal to the predetermined pressure, the gas flows from the valve port 21 to the outflow port 25. This means that the check valve 1 allows the flow from the outflow passage 23 to the inflow passage 24.

The gas that flows as described above flows from the valve port 21 to the valve chamber 22 together with foreign matter. The foreign matter is moisture, for example. Note that the foreign matter may be a liquid other than moisture or may be solid matter such as contaminants and those formed by solidification of said liquid. It is conceivable that foreign matter flowing together with the gas travels along the guide body 31 and the like and enters the area between the guide body 31 and the valve shaft 35. However, in the check valve 1, the one end 31a of the guide body 31 is separate from the housing 11. As a result, foreign matter that has adhered to the inner peripheral surface of the housing 11 can be impeded from traveling along the one end 31a of the guide body 31 and entering the area between the guide body 31 and the valve body 13. In particular, when the foreign matter is water, it is possible to avoid solidification of water that has entered the area between the guide body 31 and the valve body 13.

Furthermore, in the check valve 1, the housing 11 includes the diameter-expanding part 27. Therefore, the inner peripheral surface of the housing 11 can be radially separate from the one end 31a of the guide body 31. Furthermore, since the diameter-expanding part 27 extends to a point on the other side of the one end 31a of the guide body 31 in the axial direction, foreign matter that has flown to the diameter-expanding part 27 can be brought to the other side of the one end 31a of the guide body 31 in the axial direction. Therefore, it is possible to further impede foreign matter from being brought to the one end 31a of the guide body 31. Accordingly, it is possible to further impede the ingress of foreign matter into the area between the guide body 31 and the valve shaft 35.

In the check valve 1, a portion of the diameter-expanding part 27 that is located on the other side in the axial direction is reduced further in diameter toward the guide body 31 with increasing distance on the other side in the axial direction. Therefore, foreign matter flowing in the diameter-expanding part 27 can be caused to flow to the other side in the axial direction. As a result, it is possible to reduce the settling of foreign matter on the diameter-expanding part 27.

In the check valve 1, since the valve head part 36 covers the area between the guide body 31 and the valve shaft 35 as viewed from the one side in the axial direction, it is possible to impede the ingress of gas into the area between the guide body 31 and the valve shaft 35. As a result, it is possible to impede the ingress of foreign matter together with the gas into the area between the valve shaft 35 and the guide body 31.

In the check valve 1, the inclined part 31c of the guide body 31 is located radially inward of the extended line T1 of the tapered portion 41, and the diameter of the inclined part 31c of the guide body 31 increase from the one end 31a of the guide body 31s to the other side in the axial direction. Therefore, the outermost diameter of the valve head part 36 can be set small while, due to the inclined part 31c, keeping the extended line T1 from contacting the one end 31a of the guide body 31. Thus, the valve body 13 can be reduced in diameter.

In the check valve 1, the separation portion 43, which is the sudden shape-changing part, is located on the other side of the seating portion 42 in the axial direction. The gas flowing along the seating portion 42 (more specifically, the rounded surface 42a) separates from the valve head part 36 at the separation portion 43, and the flow of gas along the valve head part 36 is less likely to be formed on the other side of the separation portion 43 in the axial direction. Thus, the foreign matter flowing together with the gas can be impeded from adhering to the one end 31a of the guide body 31. Moreover, it is possible to further impede foreign matter that has adhered from traveling along the guide body 31 and entering the area between the valve shaft 35 and the guide body 31.

In the check valve 1, the valve shaft 35 includes the recessed groove 35c. Therefore, the recessed groove 35c can capture foreign matter that has entered the area between the valve head part 36 and the one end 31a of the guide body 31. As a result, it is possible to further impede the ingress of foreign matter into the area between the valve shaft 35 and the guide body 31.

In the check valve 1, the valve body 13 is disposed so that at least a portion of the recessed groove 35c is open downward in the direction of gravity. Therefore, the foreign matter captured in the recessed groove 35c flows downward by gravity in the direction of gravity. The foreign matter can then be dropped down from the portion facing down in the direction of gravity. As a result, the settling of foreign matter in the recessed groove 35c is reduced.

In the check valve 1, the recessed groove 35c is U-shaped in cross section. Therefore, a vortex flow can be created within the recessed groove 35c. This allows for improved foreign matter capturing performance.

In the check valve 1, it is possible to impede the ingress of gas into the area between the guide body 31 and the valve shaft 35 and thus, it is possible to impede the ingress of foreign matter into the damping chamber 38 formed on the other side of the valve body 13 in the axial direction.

In the check valve 1, the annular flow path 34 which allows passage of the gas is formed between the outer peripheral surface of the guide body 31 and the housing 11. With this, the gas can be impeded from being brought to the area between the valve shaft 35 and the guide body 31. Therefore, it is possible to impede the ingress of foreign matter together with the gas into the area between the valve shaft 35 and the guide body 31. Particularly, in the check valve 1, the tapered portion 41 of the valve head part 36 is designed to bring the gas to the outside of the guide body 31, allowing for the gas to smoothly flow to the annular flow path 34. As a result, it is possible to further impede the ingress of foreign matter together with the gas into the area between the valve shaft 35 and the guide body 31.

### <Other Embodiments>

The check valve 1 according to the present embodiment is described as an example of the valve device, but the valve device is not necessarily limited to the check valve 1. The valve device may be an electromagnetic valve or an excess flow valve, for example. In other words, it is sufficient that the valve device be a device that controls the flow of gas. Furthermore, the recessed groove 35c does not necessarily need to be formed on the valve shaft 35 of the valve body 13. Similarly, the separation portion 43 does not necessarily need to be formed on the valve head part 36. Moreover, the one end 31a of the guide body 31 is spaced apart from the housing 11 in both the axial direction and the radial direction, but does not necessarily need to be spaced apart from the housing 11. For example, the one end 31a of the guide body 31 may be spaced apart from the housing 11 in only one of the axial direction and the radial direction. Furthermore, the one end 31a of the guide body 31 may be in abutment with the housing 11 in both the axial direction and the radial direction.

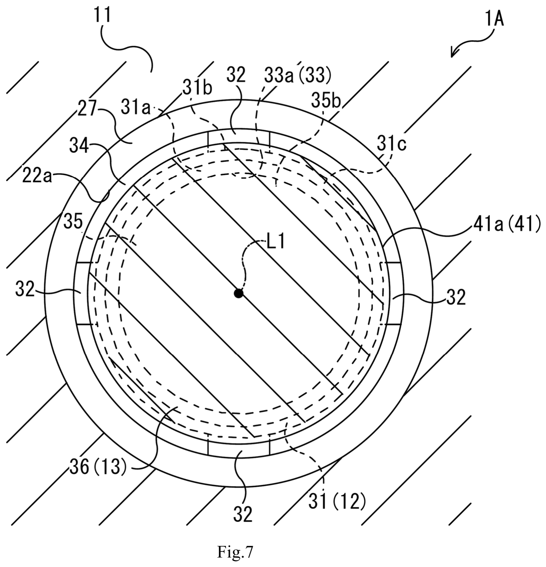

Furthermore, in the check valve 1 according to the present embodiment, the outermost peripheral portion of the tapered portion 41 overlaps the one end 31a of the guide body 31 as viewed from the one side in the axial direction (refer to Fig. 5). However, as in a check valve 1A illustrated in Fig. 7, the outermost peripheral portion of the tapered portion 41 may be larger than the outer diameter of the one end 31a of the guide body 31 as viewed from the one side in the axial direction. Even in this case, the valve head part 36 covers the area between the valve shaft 35 and the guide body 31 as viewed from the one side in the axial direction. Therefore, it is possible to impede the ingress of gas into the area between the valve shaft 35 and the guide body 31. It is possible to impede foreign matter flowing together with the gas from adhering to the one end 31a of the guide body 31 and impede foreign matter that has adhered thereto from traveling along the guide body 31 and entering the area between the valve shaft 35 and the guide body 31. Furthermore, it is possible to impede the ingress of foreign matter together with the gas into the area between the valve shaft 35 and the guide body 31. Moreover, the gas flowing along the tapered portion 41 can be brought to the outside of the one end 31a of the guide body 31. As a result, it is possible to further impede the ingress of foreign matter together with the gas into the area between the valve shaft 35 and the guide body 31.

From the foregoing description, many modifications and other embodiments of the present disclosure would be obvious to a person having ordinary skill in the art. Therefore, the foregoing description should be interpreted only as an example and is provided for the purpose of teaching the best mode for carrying out the present disclosure to a person having ordinary skill in the art. Substantial changes in details of the structures and/or functions of the present disclosure are possible within the spirit of the present disclosure.

### Reference Signs List

1, 1A check valve (valve device)
11 housing
12 guide
13 valve body
21 valve port
22 valve chamber
22a inner peripheral surface
26 valve seat
27 diameter-expanding part
31 guide body
31a one end
31c inclined part
32 support
35 valve shaft
35c recessed groove
36 valve head part
38 damping chamber
42 seating portion
43 separation portion (sudden shape-changing part)
T1 extended line
T2 tangent line

## Claims

1. A valve device comprising:
a housing including a valve port located on one side in an axial direction and through which gas flows, and a valve chamber connected to the valve port;
a guide disposed in the valve chamber and including a guide body that is cylindrical and a plurality of supports that extend outward from an outer peripheral surface of the guide body and abut an inner peripheral surface of the valve chamber; and
a valve body inserted into the guide body and configured to open and close the valve port, wherein:
one end of the guide body is spaced apart from the housing in the axial direction.

2. The valve device according to claim 1, wherein:
the housing further includes a diameter-expanding part around the valve chamber; and
the diameter-expanding part extends on the one side and the other side of the one end of the guide body in the axial direction.

3. The valve device according to claim 2, wherein:
on the other side of the one end of the guide body in the axial direction, the diameter-expanding part is reduced further in diameter toward the guide body with increasing distance on the other side in the axial direction.

4. The valve device according to any one of claims 1 to 3, wherein:
the valve body includes: a valve shaft that is inserted into the guide body; and a valve head part located on the one side of the one end of the guide body in the axial direction and including an outermost peripheral portion greater in diameter than the valve shaft; and
the valve head part covers an area between the guide body and the valve shaft as viewed from the one side in the axial direction.

5. The valve device according to any one of claims 1 to 3, wherein:
the valve body includes: a valve shaft that is inserted into the guide body; and a valve head part located on the one side of the guide body in the axial direction and including an outermost peripheral portion greater in diameter than the valve shaft; and
the outermost peripheral portion of the valve head part overlaps the one end of the guide body as viewed from the one side in the axial direction.

6. The valve device according to claim 4 or 5, wherein:
the guide body includes, on the outer peripheral surface, an inclined part increasing in diameter from the one end toward the other side in the axial direction; and
the inclined part is located on or inward of an extended line of the valve head part that extends on the other side in the axial direction.

7. The valve device according to any one of claims 4 to 6, wherein:
the housing includes a valve seat around the valve port; and
the valve head part includes: a seating portion that is seated on the valve seat; and a sudden shape-changing part located on the other side of the seating portion in the axial direction.

8. The valve device according to any one of claims 4 to 7, wherein:
the valve shaft further includes a recessed groove depressed radially inward; and
the recessed groove extends around an entire perimeter of an outer peripheral surface of the valve shaft and includes at least a portion exposed from the guide body to the one side in the axial direction.

9. The valve device according to claim 8, wherein:
the valve body is disposed so that at least a portion of the recessed groove is open downward in a direction of gravity.

10. The valve device according to claim 8 or 9, wherein:
the recessed groove is U-shaped in cross section.

11. The valve device according to any one of claims 1 to 10, wherein:
the guide body includes a bottom part; and
a damping chamber is formed between the valve body and the bottom part in the axial direction.

12. A valve device comprising:
a housing including a valve port located on one side in an axial direction and through which gas flows, and a valve chamber connected to the valve port;
a guide body that is cylindrical and disposed in the valve chamber; and
a valve body inserted into the guide body and configured to open and close the valve port, wherein:
the housing further includes a diameter-expanding part around the valve chamber; and
the diameter-expanding part extends on the one side and the other side of one end of the guide body in the axial direction, the one end being an end located on the one side in the axial direction.

13. A valve device comprising:
a housing including a valve port located on one side in an axial direction and through which gas flows, and a valve chamber connected to the valve port;
a guide body that is cylindrical and disposed in the valve chamber; and
a valve body inserted into the guide body and configured to open and close the valve port, wherein:
the valve body includes: a valve shaft that is inserted into the guide body; and a valve head part located on the one side of the guide body in the axial direction and including an outermost peripheral portion greater in diameter than the valve shaft; and
the valve head part covers an area between the guide body and the valve shaft as viewed from the one side in the axial direction.
